Europäisches Patentamt

(19) European Patent Office

Office européen des brevets

(11) Publication number : **0 476 820 A2**

# (12) EUROPEAN PATENT APPLICATION

(21) Application number : **91307166.8**

(22) Date of filing : **05.08.91**

(51) Int. Cl.⁵ : **E21B 43/02, E21B 43/267**

(30) Priority : **20.09.90 US 584990**

(43) Date of publication of application :
**25.03.92 Bulletin 92/13**

(84) Designated Contracting States :
**GB NL**

(71) Applicant : **MOBIL OIL CORPORATION**
**3225 Gallows Road**
**Fairfax, Virginia 22037-0001 (US)**

(72) Inventor : **Jennings, Alfred Roy, Jr.**
**4021 Leon Drive**
**Plano, Texas 75074 (US)**

(74) Representative : **Curtis, Philip Anthony**
**Patent Department, Mobil Court 3 Clements**
**Inn**
**London WC2A 2EB (GB)**

(54) **A method for controlling fines production in unconsolidated formations.**

(57) A method for controlling fines production in an unconsolidated or loosely consolidated formation penetrated by a cased hole. The cased hole is perforated in a manner sufficient to treat a formation internal with a consolidation resin. A thermally stable consolidation resin is injected into the internal and allowed to set. This resin is then drilled out of the hole. Afterwards the casing is reperforated and hydraulically fractured with a fluid containing a fine grain refractory proppant. A resultant fracture is propped by said proppant which removes fines from hydrocarbonaceous fluids produced after initiating a thermal enhanced oil recovery operation in the formation.

EP 0 476 820 A2

This invention relates to a method for controlling fines production in unconsolitated and loosely consolidated formations. More particularly, the invention relates to a method for preventing the production of sand or fines with hydrocarbonaceous fluids.

Sand production from hydrocarbon reservoirs can be a serious problem which can interrupt production and cause equipement damage. Sometimes, a well can be lost due to collapsed casing caused by production.

The causes of sand production, and methods to prevent or stop it, are well documented. Current in-situ chemical sand consolidation processes are generally unreliable and ineffective due to poorly controlled distribution and setting of the consolidation agents. Organic resins, such as furan epoxy and phenolic resins, are commonly used in these processes. Also, sized gravel and various types of downhole liners, such as wire-wrapped screens and slotted liners, have been used for many years to control the production of formation fines. Today many Gulf Coast wells are successfully completed using these techniqes. Application of sand consolidation processes, however, has met with limited success due to the difficulty in establishing the balance between sufficient resin for "grain-to-grain" contact and too much resin which limits the permeability of the treated zone.

Therefore, what is needed is a method for effectively consolidating a formation while maintaining its permeability during the production of hydrocarbonaceous fluids from an oil-containing reservoir.

This invention is directed to a method for controlling fines production in an unconsolidated or loosely consolidated formation which is penetrated by a cased well. In one phase of the invention, the formation is consolidated along a perforated productive interval with a consolidation resin. The consolidation resin comprises a thermally stable consolidation resin which is injected into the productive internal without regard for permeability damage by the consolidation resin. The resin is allowed to set in the formation and consolidate it so as to prevent the production of formation sands or grains. Since some solid resin remains in the well, it is subsequently drilled out.

In the next phase, the cased well is reperforated through the consolidated productive interval in a manner sufficient to create a hydrolic fracture in a desired direction. Afterwards, the formation is hydraulically fratured through the consolidated productive interval and proppped . The proppant included within the fracture fluid comprises a refractory material of a size sufficient to exclude produced formation fines or sand from hydrocarbonaceous fluids produced from said formation while propping the fracture.

After propping the fracture, a thermal enhanced oil recovery method, preferably a steam-flood, can be initiated in the formation to remove hydrocarbonaceous fluids therefrom. Since the fracture is propped with a refractory proppant, the integrity of the fracture is maintained so as to retain a high degree of formation permeability. Also, the refractory proppant is better able to dissipate heat uniformly throughout the formation.

The present invention enables an unconsolidated or loosely consolidated formation to be consolidated, while retaining a high formation permeability. The invention overcomes the difficulty in establishing a balance between sufficient resin for "grain-to-grain" contact and the use of too much resin which will limit the permeability of a treated zone.

The invention can be effective in deviated and horizontal wells as well as in vertical wells. The invention avoids the criticality for initiation and orientation of a generated fracture.

Reference is now made to the accompanying drawings, in which :

Figure 1 is a schematic representation of a cased well with a perforated interval which has been treated with a thermally stable formation consolidation material; and

Figure 2 is a topical view of a cased well with a thermally stable formation consolidation material and fracture system after having reperforated.

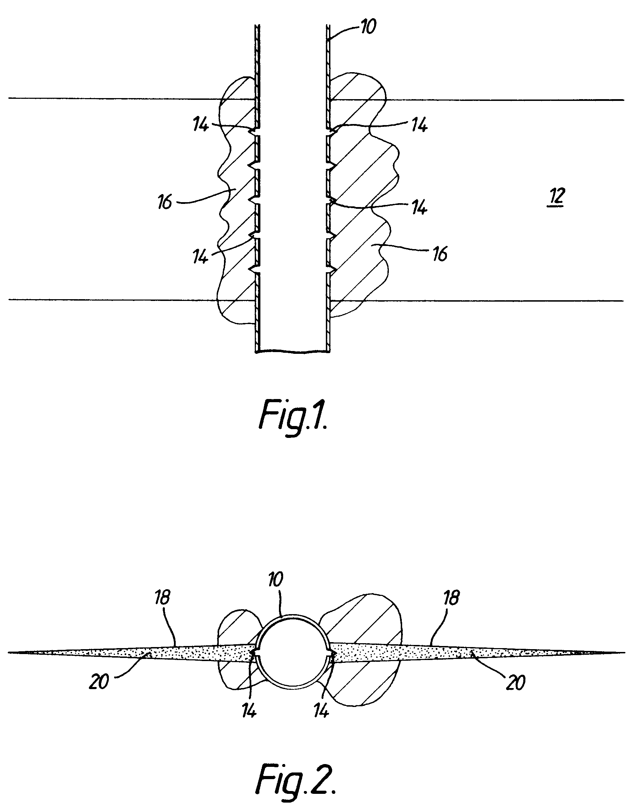

In the practice of this invention, referring to Figure 1, a cased well 10 penetrates the productive interval of formation 12. Cased well 10 is perforated by shots at intervals of one shot per two feet of interval to four shots per foot. Methods for perforating cased wells are well known to those skilled in the art and will not be discussed further here. Once well 10 has been perforated to the extent desired so as to allow fluid communication with formation 12, a thermally stable consolidation material or resin is injected into well 10. The consolidation material or resin flows through perforations 14 into the productive interval of formation 12. One the consolidation material or resin has extented into formation 12 to the extent desired, injection of the resin or material is ceased. Some of the consolidation material flows into and remains in wellbore 10. The consolidation material or resin is allowed to remain in formation 12 for a time sufficient to set up and consolidate the formation. Consolidation material or resin also sets up or hardens in wellbore 10. The hardened consolidation material or resin makes a treated zone 16 in formation 12.

After the consolidation material or resin has set to the extent desired in the formation, excess consolidation material or resin is removed from wellbore 10 by drilling. After removing the excess consolidation material or resin from wellbore 10, wellbore 10 is reperforated to allow fluid communication into treated zone 16. When reperforating, perforations are made in wellbore 10 at intervals of 2 to 8 shots per foot. Once the desired number of perforations have been made in wellbore 10, a hydraulic fracturing method is initiated so as to fracture through treated zone 16 and formation 12. The fracture is propped with a refractory material of a size sufficient to exclude formation fines or sands and to conduct heat into the formation. The preferred refractory material comprises silicon carbide or silicon nitride.

A refractory material is placed in the frac fluid so as to prop the fracture because a thermal enhanced oil recovery method will be conducted through the fracture so as to remove viscous hydrocarbonaceous fluids from the productive internal. A method for hydraulically fracturing a formation wherein a special sand control technique is employed is disclosed in US-A-4, 549, 608. A similar technique employing hydraulic fracturing and a refractory proppant for sand control is discussed in US-A-4, 817, 717.

Figure 2 illustrates how refractory proppant 20 is placed within fracture 18 which has penetrated treated zone 16. When reperforating treated zone 16 through wellbore 10, wellbore 10 is perforated with 2 to about 8 shots per foot which is the perforation density.

Consolidation materials or resins which are resistant to heat can be obtained from Halliburton Corporation and is sold under the San-Fix trade name . Other thermal consolidation materials or resins which can be used herein are disclosed in US-A-4,716,966. This patent disclosed amino resins such as melamine formaldehyde resins which modify a biopolymer thereby forming gel reinforced with transitional metal ions which are useful in profile control. The polymers have amine, amide, hydroxy and thiol functionalities. These gels are thermally stable, brine tolerant and rhealable. A related composition is disclosed in US-A-4,834,180. This patent teaches use of an amino resin such as melamine formaldehyde resin which is co-gelled and cross-linked with polymers useful for profile control where said polymers have amine, amide, hydroxyl and thiol functionalities. The resulting gels are useful as profile control agents for high temperature reservoirs during steam-flooding operations. Other thermal resins which can be utilised include phenolic resins and furfuryl alcohol derivative.

Once the formation has been consolidated and fractured to the extent desired, a thermal oil recovery method is initiated in the formation to remove viscous hydrocarbonaceous fluids therefrom. When the viscous hydrocarbonaceous fluids are produced, the fracture with a proppant therein will remove sand fines or grains from the produced fluids. Since the refractory proppant is able to withstand heat and high temperatures, it will kep the fracture open and conductive while the proppant also allows a more uniform distribution of heat into the formation. A steam-flood process which can be utilised when employing this method is described in US-A-4,489,783 and US-A-3,918,521.

When this method is utilised, it provides an effective means for consolidating a formation and removing hydrocarbonaceous fluids from the formation when it is penetrated by a deviated, horizontal, or vertical well. This method takes advantage of formation consolidation by chemical means and fracturing for fines control. Initiation and orientation of the fracture is not as critical to the effectiveness of this procedure as would otherwise be since the primary purpose of the propped fracture is to establish wellbore contact with the formation through the consolidated sheath. Thermally stable silicon and silicon nitride, when used as a proppant, helps to provide sustained fracture conductivity and effective fines control.

## Claims

1. A method for controlling fines production in an unconsolidated or loosely consolidated formation comprising:

    a) perforating a cased hole in a manner sufficient to treat a desired formation interval with a consolidated resin;

    b) injecting a thermal consolidation resin into the hole and formation where it consolidates said internal and forms a solid resin in said hole;

    c) drilling the solid resin from the hole and reperforating the hole within said internal in a manner sufficient to create a hydraulic fracture in a desired direction; and

    d) fracturing hydraulically the internal of said formation and propping a created fracture with a refractory proppant of a size sufficient to exclude produced formation fines or sand from hydrocarbonaceous fluids produced from said formation.

2. A method according to claim 1 wherein in step a) said hole is perforated with one to four shots per foot.

3. A method according to claim 1 or 2 wherein in step c) said hole and interval is reperforated with two to eight shots per foot.

4. A method according to claim 1, 2 or 3 wherein said thermal resin comprises a furfuryl alcohol derivative, melamine formaldehyde resin, or phenolic resins.

5. A method according to any preceding claim wherein in step d) the refractory proppant comprises silicon carbide or silicon nitride and mixtures thereof.

6. A method according to any preceding claim wherein in step b) the entire interval is consolidated without regard to permeability damage by the consolidation resin.

7. A method according to any preceding claim wherein in step a) the hole is vertical, deviated, or horizontal.

EP 0 476 820 A2

Fig.1.

Fig.2.